# EUROPÄISCHE PATENTANMELDUNG

(11) **EP 4 814 413 A1**
(43) Veröffentlichungstag der Anmeldung: **30.09.2026**
(21) Anmeldenummer: 26154657.6
(22) Anmeldetag: 28.01.2026
(51) Int. Cl.: F25B 43/00, F25B 41/37

(54) **VORRICHTUNG ZUR ABSCHEIDUNG VON DAMPFBLASEN**

(30) Priorität: 26.03.2025 AT 502072025
(71) Anmelder: Hauser GmbH, 4040 Linz (AT)
(72) Erfinder: Schneeberger, Hannes, 4163 Klaffer am Hochficht (AT); Gabriel, Manfred, 4154 Kollerschlag (AT)
(74) Vertreter: Hübscher & Partner Patentanwälte GmbH

(57) **Zusammenfassung**

Es wird eine Vorrichtung zur Abscheidung von Dampfblasen aus einem kondensierten Kältemittel (1) in einem Kältekreislauf beschrieben. Um insbesondere im Zusammenhang mit Kühlmöbeln und einer Kältemittelfüllmenge von höchstens 494g, insbesondere höchstens150g je Kältekreislauf eine Verringerung des Energieverbrauchs zu ermöglichen, wird ein im Kältekreislauf bezüglich einer Hauptströmungsrichtung (2) einerseits einem Drosselorgan (3) vor- und andererseits einem Kondenser (4) nachgelagerter und vom Kältemittel (1) durchströmbaren Abscheidekanal (6) vorgeschlagen, der einen flüssigkeitsfreien Kanalabschnitt (10) für die aus dem Kältemittel (1) aufsteigenden Dampfblasen umfasst, wobei zur Reduktion der Strömungsgeschwindigkeit des Kältemittels (1) der Querschnitt (d_{z}) einer in den Abscheidekanal (6) einmündenden Zuleitung (11) und der Querschnitt (dₐ) des Abscheidekanals (6) ein Verhältnis von wenigstens 1:6 aufweisen.

## Beschreibung

Die Erfindung bezieht sich auf eine Vorrichtung zur Abscheidung von Dampfblasen aus einem kondensierten Kältemittel in einem Kältekreislauf.

Bei der Entwicklung und Auslegung von Kältekreisläufen, welche insbesondere im Zusammenhang mit Kühlmöbeln wie z.B. Wandkühlregalen zum Einsatz kommen, liegt die Herausforderung unter Maßgabe einer kompakten und ressourcenschonenden Bauweise darin, die charakteristische Leistungskennzahl bzw. den "coefficient of performance" (COP) auch bei möglichst geringen Kältemittelfüllmengen zu verbessern. Bei propanbasierten Kältekreisläufen sind im Falle der Norm OVE EN IEC 60335-2-89 / Ausgabe: 2024-01-01 Kältemittelfüllmengen von höchstens 494g zulässig, wobei unter Berücksichtigung besonders kompakter Bauweisen die Kältemittelfüllmengen regelmäßig bereits auf 150g pro Kältemittelkreislauf begrenzt werden. Um vor diesem Hintergrund längere Entspannungsstrecken zwischen Kondenser und Verdampfer trotz niedriger Kältemittelfüllmengen zu ermöglichen, empfiehlt sich hierfür der Einsatz eines Kapillarrohres als Drosselorgan. Es hat sich allerdings gezeigt, dass derartige Drosselorgane empfindlich auf Lastschwankungen reagieren, wie diese beispielsweise durch verschmutzte Kondenser, schwankende Umgebungstemperaturen oder aber auch durch das Öffnen von Wandkühlregaltüren hervorgerufen werden. Dadurch kann der Anteil etwaiger aus dem Kältemittel aufsteigender Dampfblasen am Austritt des Kondensers zunehmen. Bedingt durch die bei begrenzten Kältemittelfüllmengen geringen Kältemittelreserven ist eine zuverlässige Regulierung des Dampfblasenanteils nicht mehr ohne Weiteres möglich, sodass Dampfblasen in das Drosselorgan eingesaugt und in weiterer Folge der dort vorherrschende Strömungswiderstand erhöht wird. Dies führt zu einer sinkenden Leistungskennzahl und damit zu einem höheren Energieverbrauch.

Der Erfindung liegt somit die Aufgabe zugrunde, eine Vorrichtung der eingangs geschilderten Art so auszugestalten, dass insbesondere im Zusammenhang mit Kühlmöbeln und einer Kältemittelfüllmenge von höchstens 494g, insbesondere höchstens150g je Kältekreislauf, eine Verringerung des Energieverbrauchs ermöglicht wird.

Die Erfindung löst die gestellte Aufgabe durch einen im Kältekreislauf bezüglich einer Hauptströmungsrichtung einerseits einem Drosselorgan vor- und andererseits einem Kondenser nachgelagerten und vom Kältemittel durchströmbaren Abscheidekanal, der einen flüssigkeitsfreien Kanalabschnitt für die aus dem Kältemittel aufsteigenden Dampfblasen umfasst, wobei zur Reduktion der Strömungsgeschwindigkeit des Kältemittels der Querschnitt des Abscheidekanals und der Querschnitt einer in den Abscheidekanal einmündenden Zuleitung ein Verhältnis von wenigstens 6:1 aufweisen. Dies bedeutet, dass das diesbezügliche Verhältnis auch größer sein kann, beispielsweise 10:1. Vorzugsweise ist unter dem jeweiligen Querschnitt der mittlere Querschnitt der Zuleitung und / oder der mittlere Querschnitt des Abscheidekanals zu verstehen. Der Abscheidekanal weist bevorzugt ausschließlich einen Kanaleingang und ausschließlich einen Kanalausgang auf. Die Hauptströmungsrichtung bezeichnet im Sinne der Erfindung die Richtung des Nettoflusses in einem Kältekreislauf.

Der Erfindung liegt die Erkenntnis zugrunde, dass infolge einer Querschnittsänderung im Übergangsbereich der vom Kondenser oder von einer diesem in Hauptströmungsrichtung nachgelagerten Trocknereinheit kommenden Zuleitung einerseits und dem Abscheidekanal andererseits eine Reduktion der Strömungsgeschwindigkeit des Kältemittels einhergeht, was sich vorteilhaft auf die Dampfabscheidebedingungen im Abscheidekanal auswirkt. Dadurch wird ein unerwünschtes Eindringen etwaiger Dampfblasen in das dem Abscheidekanal in Hauptströmungsrichtung, vorzugsweise unmittelbar, nachfolgende Drosselorgan, welches insbesondere ein Kapillarrohr ist, weitgehend vermieden. Folglich wird trotz im Betrieb anfallender Lastschwankungen auch bei geringen Kältemittelreserven vor dem Drosselorgan eine weitgehend konstante Beschaffenheit des flüssigen Kältemittels erreicht, sodass infolge der niedrigeren Kondensationstemperatur durch die Reduktion der Dampfblasen am Drosselorganeintritt sowie durch den konstanten Massestrom im Drosselorgan die Voraussetzung für einen energieeffizienten Kältekreislaufbetrieb geschaffen wird.

Dabei hat sich insbesondere gezeigt, dass durch die erfindungsgemäßen Maßnahmen und dem durch den Abscheidekanal zusätzlich geschaffenen Ausgleichsvolumen im Kältekreislauf Druckschwankungen auf der Hochdruckseite bzw. seitens des Kondensers wirksam verringert werden. Zusätzlich wird seitens des Verdampfers eine Überhitzung reduziert bzw. vermieden, was zu einer höheren Verdampfungstemperatur und damit in weiterer Folge zu einer Verringerung der erforderlichen Verdichtungsenergie im Kältekreislauf führt. Somit wird erfindungsgemäß insgesamt eine Erhöhung der Leistungskennzahl auch bei niedrigen Kältemittelreserven erreicht, insbesondere dann, wenn im Kältekreislauf Propan (R290) als Kältemittel eingesetzt wird, dessen Füllmenge vorzugsweise höchstens 494g, noch bevorzugter höchstens 150g beträgt. Dadurch, dass beispielsweise Propan (R290) eine relativ niedrige dynamische Viskosität und damit in Bezug auf die typischen Betriebstemperaturfenster vernachlässigbare Viskositätsschwankungen aufweist, lässt sich der auf die Querschnittserhöhung bezogene Formfaktor im Wesentlichen umgekehrt proportional auf die damit verbunden Änderung der Strömungsgeschwindigkeit des Kältemittels übertragen. Dies bedeutet, dass beispielsweise eine Querschnittsänderung der Zuleitung gegenüber dem Abscheidekanal im Verhältnis von 1:6 zu einer Reduktion der Strömungsgeschwindigkeit des Kältemittels ausgehend von der Zuleitung zum Abscheidekanal im Verhältnis von 6:1 führt.

Der aus dem flüssigen Kältemittel aufsteigende Dampf entweicht erfindungsgemäß in das durch den flüssigkeitsfreien Kanalabschnitt gebildete freie Kanalvolumen des Abscheidekanals, sammelt sich dort und kondensiert auch zum Teil wieder. Dementsprechend muss auch das Kanalvolumen dimensioniert werden, wobei unter anderem auch der hochdruckseitige Betriebspunkt, die tatsächliche Kältemittelfüllmenge, der Massenstrom im Kältekreislauf sowie die wirksame Länge des Drosselorgans, d.h. insbesondere die Kapillarrohrlänge, zu berücksichtigen sind.

Um die Abscheideleistung weiter zu verbessern, wird vorgeschlagen, dass der Abscheidekanal in Einbaulage gegenüber der Lotrechten in einem Winkel von 30° bis 45° geneigt ist. Es hat sich gezeigt, dass durch eine derartige Schräglage des Abscheidekanals die Gefahr sowohl eines unerwünschten Dampfblaseneintritts in das Drosselorgan, als auch einer der Abscheideleistung abträglichen Ausbildung turbulenter Strömungen im Abscheidekanal wirksam reduziert wird. Dies sorgt für eine gleichmäßige Durchströmung des Abscheidekanals durch das flüssige Kältemittel, wobei das Aufsteigen der Dampfblasen in das durch den flüssigkeitsfreien Kanalabschnitt gebildete freie Kanalvolumen erleichtert wird.

Besonders günstige Abscheidebedingungen ergeben sich, wenn im Abscheidekanal in dem der Zuleitung zugeordneten Mündungsbereich ein Strömungsleitelement unter Ausbildung eines dem Mündungsbereich in Hauptströmungsrichtung nachfolgenden Abscheidebereiches angeordnet ist. Das Strömungsleitelement kann beispielsweise eine Prallplatte bilden, die im Mündungsbereich des Abscheidekanals quer zur Hauptströmungsrichtung angeordnet ist. Durch diese Maßnahmen wird nicht nur eine zusätzliche Verringerung der Strömungsgeschwindigkeit des Kältemittels bereits im Mündungsbereich erreicht, sondern in vorteilhafter Weise auch eine Strömungslenkung ermöglicht, sodass das flüssige Kältemittel schwerkraftbedingt entlang des Strömungsleitelements zum Kanalboden geleitet wird. Letzteres bewirkt, dass sich der flüssigkeitsfreie Kanalabschnitt im Vergleich zu einem strömungsleitelementfreien Abscheidekanal vergrößert, sodass durch das damit ebenfalls größere freie Kanalvolumen das Abscheiden der Dampfblasen erleichtert wird.

Eine erfindungsgemäße Vorrichtung wird vorzugsweise in einem Kühlmöbel, insbesondere einem Wandkühlregal, eingesetzt. Der entsprechende Kältekreislauf umfasst mehre miteinander strömungsverbundene Komponenten. Es kann beispielsweise ein Kondenser vorgesehen sein, dem in Hauptströmungsrichtung ein Trockner, eine erfindungsgemäße Vorrichtung zur Abscheidung der Dampfblasen, ein Kapillarrohr als Drosselorgan sowie ein Verdampfer nachgelagert sind. Der Verdampfer kann dabei einen Ausgang für eine Saugleitung aufweisen, durch welche der Verdampfer mit einem Flüssigkeitsabscheider strömungsverbunden ist.

Gemäß einem erfindungsgemäßen Verfahren zum Betrieb eines Kältekreislaufs, beispielsweise in einem Kühlmöbel, insbesondere einem Wandkühlregal, unter Verwendung einer erfindungsgemäßen Vorrichtung wird die Strömungsgeschwindigkeit des Kältemittels im Abscheidekanal so verringert, dass sie höchstens einem Sechstel der Strömungsgeschwindigkeit in der Zuleitung entspricht. Beträgt beispielsweise die Strömungsgeschwindigkeit des Kältemittels in der Zuleitung ca. 0,41 m/s, so stellt sich für eine vorteilhafte Dampfblasenabscheidung durch die erfindungsgemäßen Maßnahmen im Abscheidekanal eine Strömungsgeschwindigkeit von höchstens ca. 0,068 m/s ein.

In der Zeichnung ist der Erfindungsgegenstand beispielsweise dargestellt. Es zeigen
- Fig. 1: eine schematische Darstellung einer erfindungsgemäßen Vorrichtung in einem Kältekreislauf in einer ersten Ausführungsform und
- Fig. 2: eine der Fig. 2 entsprechende Darstellung einer erfindungsgemäßen Vorrichtung in einer weiteren Ausführungsform.

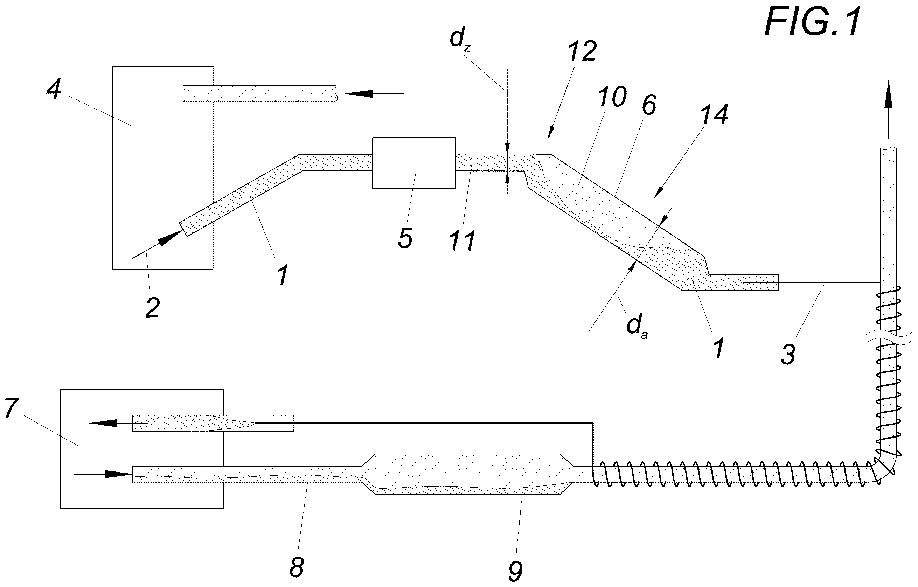

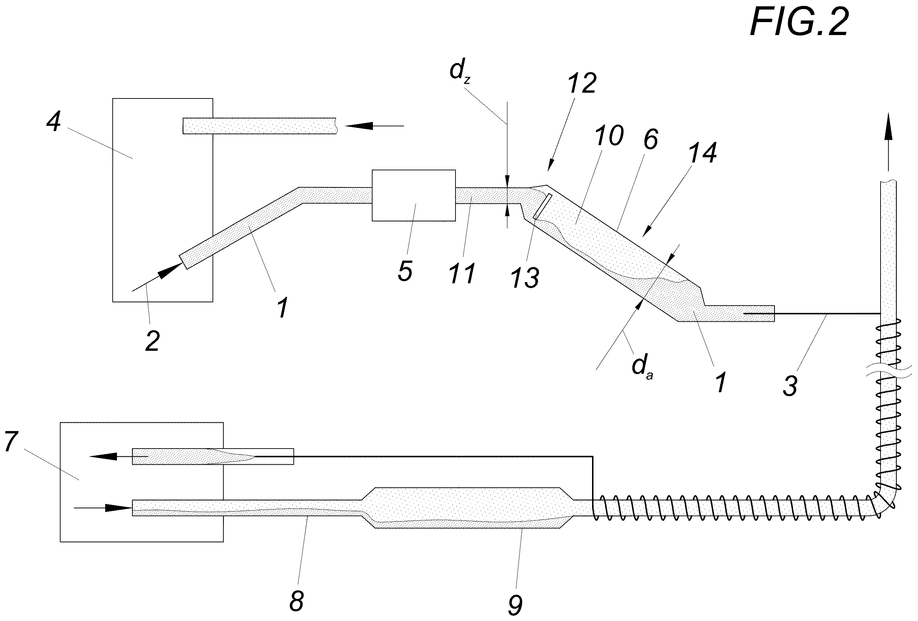

Eine erfindungsgemäße Vorrichtung zur Abscheidung von Dampfblasen aus einem kondensierten Kältemittel 1 in einem Kältekreislauf umfasst einen bezüglich einer Hauptströmungsrichtung 2 einerseits einem Drosselorgan 3 vorund andererseits einem Kondenser 4 sowie einer Trocknereinheit 5 nachgelagerten und vom Kältemittel 1 durchströmbaren Abscheidekanal 6. Das Drosselorgan 3 ist als Kapillarrohr ausgebildet und mündet in Hauptströmungsrichtung 2 in einen Verdampfer 7, aus welchem wiederum eine Saugleitung 8 wegführt, in welcher ein Flüssigkeitsabscheider 9 angeordnet ist. Gemäß Fig. 1 und 2 wird schematisch ein Teil eines Kältekreislaufs, beispielsweise für einen Wandkühlregal, angedeutet. Es versteht sich dabei von selbst, dass der Kältekreislauf noch weitere, aus Übersichtsgründen nicht näher dargestellte Komponenten wie z.B. einen Verdichter etc. umfassen kann.

Der Kältekreislauf weist vorzugsweise Propan (R290) als Kältemittel auf, dessen Füllmenge auf 494g, insbesondere auf 150g, begrenzt ist. Um eine Verbesserung der Leistungskennzahl (COP) zu ermöglichen und somit den Energieverbrauch beim Betrieb eines derartigen Kältekreislaufs zu verringern, ist eine zuverlässige Abscheidung etwaiger Dampfblasen aus dem Kältemittel 1 entscheidend, bevor dieses in das Drosselorgan 3 eingeleitet wird. Hierzu weist der Abscheidekanal 6 erfindungsgemäß einen flüssigkeitsfreien Kanalabschnitt 10 für die aus dem Kältemittel 1 aufsteigenden Dampfblasen auf, wobei zur Reduktion der Strömungsgeschwindigkeit des Kältemittels 1 der Querschnitt dₐ des Abscheidekanals 6 und der Querschnitt d_{z} einer in den Abscheidekanal 6 einmündenden Zuleitung 11 ein Verhältnis von wenigstens 6:1 aufweisen. Die Strömungsgeschwindigkeit verringert sich dabei im Wesentlichen umgekehrt proportional zur Querschnittserhöhung in Hauptströmungsrichtung 2, sodass die Strömungsgeschwindigkeit von beispielsweise ca. 0,41 m/s in der Zuleitung 11 auf ca. 0,068 m/s im Abscheidekanal 6 reduziert wird.

Um die Gefahr einer Ausbildung unerwünschter Turbulenzen einerseits sowie einen Dampfblaseneintritt in das Drosselorgan 3 weiter zu reduzieren, ist der Abscheidekanal 6 in der gezeigten Einbaulage gegenüber der Horizontalen in einem Winkel von ca. 33° geneigt.

Fig. 2 zeigt eine weitere Ausführungsform einer erfindungsgemäßen Vorrichtung, wobei im Abscheidekanal 6 in dem der Zuleitung 11 zugeordneten Mündungsbereich 12 ein Strömungsleitelement 13 unter Ausbildung eines dem Mündungsbereich 12 in Hauptströmungsrichtung 2 nachfolgenden Abscheidebereiches 14 angeordnet. Das Strömungsleitelement 13 ist gemäß Fig. 2 als quer zur Hauptströmungsrichtung 2 verlaufende Prallplatte ausgebildet.

Durch diese Maßnahmen wird eine zusätzliche Verringerung der Strömungsgeschwindigkeit des Kältemittels 1 bereits im Mündungsbereich 12 erreicht, und in vorteilhafter Weise auch eine Strömungslenkung ermöglicht, sodass das flüssige Kältemittel 1 schwerkraftbedingt entlang des Strömungsleitelements 13 zum Kanalboden geleitet wird. Dadurch vergrößert sich das für die Dampfblasenabscheidung effektive freie Volumen des Abscheidekanals 6 im Abscheidebereich 14, was die Abscheideleistung weiter verbessert.

## Patentansprüche

1. Vorrichtung zur Abscheidung von Dampfblasen aus einem kondensierten Kältemittel (1) in einem Kältekreislauf, **gekennzeichnet durch** einen im Kältekreislauf bezüglich einer Hauptströmungsrichtung (2) einerseits einem Drosselorgan (3) vorund andererseits einem Kondenser (4) nachgelagerten und vom Kältemittel (1) durchströmbaren Abscheidekanal (6), der einen flüssigkeitsfreien Kanalabschnitt (10) für die aus dem Kältemittel (1) aufsteigenden Dampfblasen umfasst, wobei zur Reduktion der Strömungsgeschwindigkeit des Kältemittels (1) der Querschnitt (dₐ) des Abscheidekanals (6) und der Querschnitt (d_{z}) einer in den Abscheidekanal (6) einmündenden Zuleitung (11) ein Verhältnis von wenigstens 6:1 aufweisen.

2. Vorrichtung nach Anspruch 1, **dadurch gekennzeichnet, dass** der Abscheidekanal (6) in Einbaulage gegenüber der Horizontalen in einem Winkel von 30° bis 45° geneigt ist.

3. Vorrichtung nach Anspruch 1 oder 2, **dadurch gekennzeichnet, dass** das Drosselorgan (3) ein Kapillarrohr ist.

4. Vorrichtung nach Anspruch 3, **dadurch gekennzeichnet, dass** in Hauptströmungsrichtung (2) das Kapillarrohr unmittelbar an den Abscheidekanal (6) anschließt.

5. Vorrichtung nach einem der Ansprüche 1 bis 4, **dadurch gekennzeichnet, dass** im Abscheidekanal (6) in dem der Zuleitung (11) zugeordneten Mündungsbereich (12) ein Strömungsleitelement (13) unter Ausbildung eines dem Mündungsbereich (12) in Hauptströmungsrichtung (2) nachfolgenden Abscheidebereiches (14) angeordnet ist.

6. Vorrichtung nach Anspruch 5, **dadurch gekennzeichnet, dass** das Strömungsleitelement (13) eine Prallplatte bildet, die im Mündungsbereich (12) des Abscheidekanals (6) quer zur Hauptströmungsrichtung (2) angeordnet ist.

7. Vorrichtung nach einem der Ansprüche 1 bis 6, **dadurch gekennzeichnet, dass** der Abscheidekanal (6) ausschließlich einen Kanaleingang und ausschließlich einen Kanalausgang aufweist.

8. Vorrichtung nach einem der Ansprüche 1 bis 7, **gekennzeichnet durch** Propan als Kältemittel (1), dessen Menge vorzugsweise höchstens 494g, noch bevorzugter höchstens 150g beträgt.

9. Kühlmöbel mit einer Vorrichtung nach einem der Ansprüche 1 bis 8.

10. Verfahren zum Betrieb eines Kältekreislaufs unter Verwendung einer Vorrichtung nach einem der Ansprüche 1 bis 8, **dadurch gekennzeichnet, dass** die Strömungsgeschwindigkeit des Kältemittels (1) im Abscheidekanal (6) so verringert wird, dass sie höchstens einem Sechstel der Strömungsgeschwindigkeit in der Zuleitung (11) entspricht.
